# EUROPÄISCHE PATENTSCHRIFT

(11) **EP 2 308 729 B1**
(45) Veröffentlichungstag und Bekanntmachung des Hinweises auf die Patenterteilung: **09.05.2012**
(21) Anmeldenummer: 10011241.6
(22) Anmeldetag: 28.09.2010
(51) Int. Cl.: B60T 7/08, B60T 7/10

(54) **Fahrzeug, insbesondere Elektrofahrzeug, mit einer elektrisch betätigten Feststellbremse**
Vehicle, in particular electric vehicle, with an electrically actuated parking brake
Véhicule, notamment véhicule électrique, doté d'un frein de stationnement électrique

(30) Priorität: 09.10.2009 DE 102009048827
(43) Veröffentlichungstag der Anmeldung: 13.04.2011
(73) Patentinhaber: STILL GmbH, 22113 Hamburg (DE)
(72) Erfinder: Tügel, Caspar, 20253 Hamburg (DE); Bergmann, Ansgar, 22941 Bargteheide (DE)
(74) Vertreter: Geirhos, Johann

(56) Entgegenhaltungen:
- EP-A2- 1 415 875
- WO-A1-2007/138087
- DE-A1- 19 620 463
- DE-A1-102005 018 003
- DE-A1-102007 015 809
- DE-C2- 4 143 667

## Beschreibung

Die Erfindung betrifft ein Fahrzeug, insbesondere Elektrofahrzeug, mit einer elektrisch betätigten Feststellbremse, wobei die Feststellbremse mittels einer elektrischen Betätigungseinrichtung betätigbar ist, die einen Elektromotor und einen mit dem Elektromotor trieblich verbundenen Gewindespindeltrieb, insbesondere einen selbsthemmenden Gewindespindeltrieb, umfasst, wobei der Gewindespindehrieb mit einem Übertragungsmittel, insbesondere einem Bremsseil, mit der Feststellbremse zu deren Betätigung in Wirkverbindung steht, wobei zur Betätigung der elektrischen Betätigungseinrichtung ein Betätigungselement vorgesehen ist.

Bei Fahrzeugen, beispielsweise Flurförderzeugen, ist zum sichern Abstellen des Fahrzeugs eine Feststellbremse vorgesehen, die im normalen Fahrbetrieb des Fahrzeugs in eine Lösestellung beaufschlagt ist und zum sicheren Abstellen des Fahrzeugs in eine Bremsstellung beaufschlagbar ist. Die Feststellbremse ist in der Regel an einem Fahrzeugrad oder eine Antriebsachse angeordnet und steht mittels eines Übertragungsmittels, beispielsweise eines Gestänges oder eines Bremsseils, mit einer Betätigungseinrichtung in Wirkverbindung.

Aus der DE 102 50 139 A1 ist ein als Flurförderzeug ausgebildetes Fahrzeug mit einer manuell betätigten Feststellbremse bekannt, bei der ein manuell zu betätigender Betätigungshebel mittels eines Sielzuges oder eines Gestänges als Übertragungsmittels zur Betätigung der Feststellbremse vorgesehen ist.

Derartige Feststellbremsen können als Federspeicherbremsen ausgebildet sein, die mittels einer Feder in die Bremsstellung beaufschlagt sind und entgegen der Kraft der Feder von einer Betätigungskraft, beispielsweise einer hydraulischen, elektromagnetischen oder mechanischen Kraft, in die Lösestellung betätigbar sind. Insbesondere bei batterie-elektrisch betriebenen Elektrofahrzeugen, beispielsweise Flurförderzeugen, erfolgt oftmals ein Transport zum Kunden ohne eine als Batterieblock ausgebildete Energieversorgungseinheit und somit ohne eine Energieversorgung. Um hierbei bei einem Betrieb des Flurförderzeugs ohne Energieversorgungseinheit oder bei einem Ausfall der Energieversorgung eine Betätigung der Feststellbremse in die Lösestellung zu erzielen, sind bei Federspeicherbremsen aufwändige Zusatzeinrichtungen erforderlich, um die Feststellbremse in die Lösestellung betätigen zu können.

Bei mobilen Arbeitsmaschinen, insbesondere Flurförderzeugen, Baumaschinen und landwirtschaftlichen Fahrzeugen, ist es bereits bekannt, zur Betätigung der Feststellbremse elektro-mechanische wirkende Betätigungseinrichtungen vorzusehen. Derartige elektrische Betätigungseinrichtungen weisen in der Regel einen die Betätigungskraft für die Bremsstellung der Feststellbremse erzeugenden Elektromotor auf, der über eine Getriebeeinrichtung einen Gewindespindeltrieb antreibt, an dem ein Übertragungsmittel, beispielsweise ein Seilzug eines Bremsseils oder ein Bremsgestänge, zur Betätigung der Feststellbremse befestigt ist. Der Gewlndespindeltrieb ist bevorzugt selbsthemmend ausgebildet, damit die aufgebrachte Bremskraft beim Abschalten des Elektromotors erhalten bleibt und somit die Feststellbremse bei abgeschaltetem Elektromotor in der Lösestellung bzw. der Bremsstellung verbleibt. Aufgrund der Selbsthemmung des Gewindespindelgetriebes ist bei derartigen elektrischen Betätigungseinrichtungen eine Betätigung der Feststellbremse ohne Energieversorgung nicht möglich.

Aus der DE 41 43 667 C2 ist ein gattungsgemäßes Fahrzeug mit einer elektrisch betätigten Feststellbremse bekannt Die Feststellbremse umfasst einen Elektromotor als Antrieb, der eine Gewindespindel eines Gewindespindeltriebs antreibt. Die Spindelmutter des Gewindespindeltriebs ist als Wiegebalken ausgebildet, der mittels zweier Bowdenzüge mit den als Feststellbremsen ausgebildeten Radbremsen verbunden ist. Zur Steuerung des Elektromotors ist eine Betätigungseinrichtung vorgesehen, die ein als Handhebel ausgebildetes Betätigungselement als Sollwertgeber umfasst. Der Handhebel ist in Griffweite des Fahrers angeordnet. An dem als Handhebel ausgebildeten Betätigungselement ist ein Sensor angeordnet, der ein elektrisches Signal an ein den Elektromotor steuerndes elektronisches Steuergerät liefert. Eine von Hand betätigbare mechanische Hilfslöseeinrichtung ist mit dem Elektromotor verbunden, um bei einer gestörten Energieversorgung ein Lösen der gespannten Radbremsen durch die Hilfslöseeinrichtung von Hand zu ermöglichen.

Aus der DE 196 20 463 A1 ist eine elektromotorisch betriebene Feststellbremse eines Fahrzeugs mit einer Fremdkraftbetätigungseinrichtung und einer Notbetätigungseinrichtung bekannt. Die Fremdkraftbetätlgungseinrichtung ist von einem Elektromotor und einem Zahnradgetriebe gebildet, das als Schneckengetriebe ausgebildet ist. Das Schneckenrad des Schneckengetriebes weist ein Innengewinde auf, das mit einem Bewegungsgewinde einer Gewindespindel zusammenwirkt. Die Gewindespindel steht mit einer Kraftübertragungseinrichtung zur Übertragung der Bremskraft auf die Feststellbremse in Wirkverbindung. Mittels der Notbetätigungseinrichtung kann die Gewindespindel manuell verstellt werden. Die Notbetätigungseinrichtung weist ein Zahnradgetriebe mit einer Schnecke und einem Schneckenrad auf, wobei das Schneckenrad mit der Gewindespindel drehfest jedoch axial verschiebbar verbunden ist.

Der vorliegenden Erfindung liegt die Aufgabe zugrunde, ein Fahrzeug der eingangs genannten Gattung mit einer mittels einer elektrischen Betätigungseinrichtung der Feststellbremse zur Verfügung zu stellen, bei der mit geringem Bauaufwand die Feststellbremse ohne Energieversorgung betrieben werden kann.

Diese Aufgabe wird erfindungsgemäß dadurch gelöst, dass die elektrische Betätigungseinrichtung im Fahrerarbeitsplatzbereich angeordnet Ist und an der elektrischen Betätigungseinrichtung eine Handbetätigungseinrichtung zur manuellen Betätigung der Feststellbremse in eine Bremsstellung bzw. eine Lösestellung bei fehlender Energieversorgung vorgesehen ist, wobei die Handbetätigungseinrichtung auf eine von dem Elektromotor angetriebene Spindelmutter des Gewindespindeltriebs wirkt. Die Anordnung der elektrischen Betätigungseinrichtung im Fahrerarbeitsplatzbereich und die zusätzliche Handbetätigungseinrichtung an der elektro-mechanischen Betätigungseinrichtung ermöglicht es auf einfache Weise, dass die Bedienperson in ergonomisch günstiger Weise bei einem Energieausfall oder dem Transport des Fahrzeugs ohne Energieversorgungseinheit die Feststellbremse mittels der Handbetätigungseinrichtung manuell und dosiert in die Bremsstellung oder in die Lösestellung betätigen kann.

Durch die zusätzliche Handbetätigungseinrichtung an der elektrischen Betätigungseinrichtung und die Anordnung der elektrischen Betätigungseinrichtung im Bereich des Fahrerarbeitsplatzes kann somit auf einfache Weise eine Handbetätigung der Feststellbremse und somit ein Betrieb der Feststellbremse ohne Energieversorgung, beispielsweise während des Transports oder der Verladung des Fahrzeugs, bzw. beim Ausfall der Energieversorgung ermöglicht werden.

Gemäß einer bevorzugten Ausführungsform der Erfindung umfasst die Handbetätigungseinrichtung ein Handrad, das zur manuellen Betätigung mit dem Gewindespindeltrieb der elektrischen Betätigungseinrichtung in Wirkverbindung bringbar ist. Durch ein Handrad, mit dem der Gewindespindeltrieb der elektrischen Betätigungseinrichtung betätigt werden kann, kann eine zusätzliche manuelle Betätigung der Feststellbremse mit einfachem Bauaufwand erzielt werden.

Der Gewindespindeltrieb umfasst gemäß einer vorteilhaften Ausgestaltungsform der Erfindung eine mittels des Elektromotors angetriebene Spindelmutter und eine Gewindespindel, die mit dem Übertragungsmittel verbunden ist, wobei das Handrad zur manuellen Betätigung mit der Spindelmutter in Wirkverbindung bringbar ist. Mit einer derartigen elektro-mechanischen Betätigungseinrichtung kann von dem Elektromotor über den Gewindespindeltrieb im elektrischen Betrieb der Betätigungseinrichtung die Betätigungskraft zur Beaufschlagung der Feststellbremse in die Bremsstellung erzeugt werden. Über eine Verbindung des Handrads mit der Spindelmutter des Gewindespindeltriebs kann die zusätzliche manuelle Betätigung der Feststellbremse bei einer derartigen elektro-mechanischen Betätigungseinrichtung auf einfache Weise erzielt werden.

Gemäß einer vorteilhaften Ausführungsform der Erfindung ist für den elektrischen Betrieb der Betätigungseinrichtung und somit der elektrischen Aktuierung der Feststellbremse eine Außereingriffsstellung der Handbetätigungseinrichtung vorgesehen. Mit einer derartigen Außereingriffsstellung kann auf einfache Weise erzielt werden, dass im normalen elektrischen Betrieb der Betätigungseinrichtung, wobei die Betätigungskraft zur Beaufschlagung der Feststellbremse in die Bremsstellung von dem Elektromotor erzeugt wird, die Handbetätigungseinrichtung von dem Gewindespindeltrieb trieblich getrennt ist, so dass ein unnötiger Verschleiß der Handbetätigungseinrichtung im normalen elektrischen Betrieb der Betätigungseinrichtung vermieden werden kann.

Mit besonderem Vorteil umfasst hierzu die Handbetätigungseinrichtung einen Mitnehmer, der mit der Spindelmutter in Verbindung bringbar ist, wobei der Mitnehmer mittels des Handrades betätigbar ist. Die Handbetätigungseinrichtung ist somit von dem Handrad und einem Mitnehmer gebildet, wobei das Handrad über den Mitnehmer mit der Spindelmutter zur manuellen Betätigung der Feststellbremse in trieblicher Verbindung bringbar ist. Mit einem derartigen Mitnehmer, der die Drehmomentverbindung von dem Handrad zu der Spindelmutter herstellt, kann eine Außereingriffsstellung der Handbetätigungseinrichtung im normalen elektrischen Betrieb der Betätigungseinrichtung mit geringem Bauaufwand und auf einfache Weise ermöglicht werden.

Zweckmäßigerweise ist zwischen dem Mitnehmer und der Spindelmutter eine Drehmomentübertragungseinrichtung ausgebildet, wodurch das an dem Mitnehmer anstehende Drehmoment bei der manuellen Betätigung auf die Spindelmutter zu deren Antrieb übertragen werden kann.

Die Drehmomentübertragungseinrichtung ist gemäß einer vorteilhaften Ausgestaltungsform der von mindestens einer Klaue des Mitnehmers und einer mit der Klaue zusammenwirkenden Nut der Spindelmutter gebildet. Eine derartige von Klauen an dem Mitnehmer und entsprechenden Nuten an der Spindelmutter gebildete Welle-Nabe-Verbindung weist einen geringen Herstellaufwand auf und kann auf einfache Weise an dem Mitnehmer sowie der Spindelmutter hergestellt werden. Mit einer derartigen Drehmomentübertragungseinrichtung ist ebenfalls auf einfache Weise die Außereingriffsstellung realisierbar, in der die Drehmomentübertragungseinrichtung getrennt ist.

Vorteilhafterweise ist zwischen dem Handrad und dem Mitnehmer eine Drehmomentübertragungseinrichtung ausgebildet, wodurch zur manuellen Betätigung der Feststellbremse das an dem Handrad aufgebrachte manuelle Drehmoment auf einfache Weise auf den Mitnehmer zum Antrieb der Spindelmutter übertragen werden kann, um die Betätigungskraft zur Betätigung der Feststellbremse in die Bremsstellung zu erzeugen.

Die Drehmomentübertragungseinrichtung zwischen dem Handrad und dem Mitnehmer ist gemäß einer vorteilhaften Ausführungsform der Erfindung von mindestens einer radialen, nutförmigen Einbuchtung an dem Mitnehmer und jeweils einer mit der Einbuchtung in Eingriff bringbaren Mitnehmerzunge des Handrades gebildet. Eine derartige, keilwellenartige Welle-Nabe-Verbindung kann von entsprechenden Mitnehmerzungen an dem Handrad und Einbuchtungen an dem Mitnehmer auf einfache Weise hergestellt werden.

Die Mitnehmerzungen sind hierbei gemäß einer bevorzugten Ausgestaltungsform der Erfindung an dem Handrad gegenüberliegend zu einem Griffabschnitt angeordnet, wodurch ein einfacher Aufbau des Handrades und ein ergonomisch günstiger Griffabschnitt auf einfache Weise erzielbar sind.

Besondere Vorteile sind erzielbar, wenn gemäß einer bevorzugten Ausführungsform der Erfindung die Einbuchtung des Mitnehmers mit geneigten seitlichen Flankenabschnitten versehen ist und die Mitnehmerzunge des Handrades elastisch verformbar ist, wobei die Vorspannung der Mitnehmerzunge und die Flankenwinkel der seitlichen Flankenabschnitten der Einbuchtung derart abgestimmt sind, dass eine Drehmomentbegrenzung für das an dem Handrad aufgebrachte manuelle Drehmoment erzielbar ist. Die Drehmomentübertragung erfolgt bei einer derartigen Welle-Nabe-Verbindung kraftschlüssig über die seitliche Flankenabschnitte der Einbuchtungen an dem Mitnehmer. Durch geneigte und somit schräge seitliche Flankenabschnitte an den Einbuchtungen kann in Verbindung mit elastischen Mitnehmerzungen auf einfache Weise eine Drehmomentbegrenzung bei der manuellen Betätigung erzielt werden, da die Mitnehmerzungen bei Überschreitung eines bestimmten Drehmoment aufgebogen werden und über die Einbuchtungen gleiten können. Hierdurch kann bei der Handbetätigung das zur Betätigung der Feststellbremse in die Bremsstellung erforderliche Drehmoment übertragen werden und eine Überlastung durch ein zu hohes aufgebrachtes Drehmoment während der Handbetätigung auf einfache Weise und wirksam vermieden werden.

Gemäß einer vorteilhaften Weiterbildung der Erfindung ist der Mitnehmer im Bereich eines Getriebegehäusedeckels des Gewindespindeltriebs längsverschiebbar angeordnet, wobei zwischen dem Getriebegehäusedeckel und dem Mitnehmer eine Federeinrichtung angeordnet ist, die den Mitnehmer in die Außereingriffsstellung beaufschlagt, in der die Drehmomentübertragungseinrichtung zu der Spindelmutter getrennt ist. Mit einer derartigen Federeinrichtung kann der Mitnehmer auf einfache Weise von der Spindelmutter getrennt werden, so dass im normalen elektrischen Betrieb der Betätigungseinrichtung die Klauen des Mitnehmers außer Eingriff sind mit den Nuten der Spindelmutter und die Drehmomentübertragungseinrichtung zwischen den Spindelmutter und dem Mitnehmer getrennt ist. Hierdurch kann auf einfache Weise erzielt werden, dass im normalen elektrischen Betrieb der Betätigungseinrichtung und somit der Feststellbremse bei einer elektrischen Aktuierung der Feststellbremse die Handbetätigungseinrichtung in die Außereingriffsstellung beaufschlagt ist und außer Funktion ist, um zusätzlichen Energieverbrauch und zusätzlichen Verschleiß zu vermeiden.

Zweckmäßigerweise ist hierbei zwischen dem Getriebegehäusedeckel und dem Mitnehmer ein Anschlag für die Außereingriffsstellung des Mitnehmers ausgebildet.

Ein derartiger Anschlag kann gemäß einer zweckmäßigen Ausgestaltungsform der Erfindung mit geringem zusätzlichem Bauaufwand von mindestens einer Rastnase des Mitnehmers gebildet werden, die mit einem Vorsprung an dem Getriebegehäusedeckel in Wirkverbindung bringbar ist.

Gemäß einer vorteilhaften Ausführungsform der Erfindung ist das Handrad mit dem Griffabschnitt während des elektrischen Betriebs der Feststellbremse in der Außereingriffsstellung der Handbetätigungseinrichtung auf einen Getriebegehäusedeckel des Getriebegehäuses aufsteckbar. Zweckmäßigerweise ist in dieser Außereingriffsstellung das Handrad über den Mitnehmer gestülpt. Hierdurch wird erzielt, dass das Handrad im normalen elektrischen Betrieb der Betätigungseinrichtung, in dem sich die Handbetätigungseinrichtung in der Außereingriffsstellung befindet und außer Funktion ist, an der Betätigungseinrichtung in einer platzsparenden Stellung angeordnet ist, um zur manuellen Betätigung der Feststellbremse griffbereit zu sein.

Zweckmäßigerweise ist das Handrad mittels einer Verliersicherung, insbesondere einer flexiblen Kunststofflasche, an der elektrischen Betätigungseinrichtung gesichert, so dass ein Verlust des Handrads auf einfache Weise vermieden werden kann und die manuelle Betätigung der Feststellbremse durch das an der Betätigungseinrichtung in der Parkstellung befindliche Handrad sichergestellt wird.

Hinsichtlich einer günstigen Ergonomie ergeben sich besondere Vorteile, wenn die elektrische Betätigungseinrichtung gemäß einer Ausführungsform der Erfindung im Bereich einer Bedienkonsole, insbesondere eines Armaturenbretts, des Fahrerarbeitsplatzes angeordnet ist. Bei einer derartigen Anordnung der elektrischen Betätigungseinrichtung der Feststellbremse befindet sich die Betätigungseinrichtung im Griffbereich einer beispielsweise auf einem Fahrersitz sitzenden Bedienperson, so dass sich für die manuelle Betätigung der Feststellbremse mit der Handbetätigungseinrichtung eine gute Zugänglichkeit im Komfortfeld der Bedienperson ergibt.

Die elektrische Betätigungseinrichtung ist hierbei an der Bedienkonsole bevorzugt unterhalb einer entfernbaren Abdeckung, insbesondere eines Deckels, angeordnet, wobei bei entfernter Abdeckung die Handbetätigungseinrichtung zur manuellen Betätigung der Feststellbremse in eine Eingriffstellung bringbar ist, insbesondere das Handrad mit dem Gewindespindeltrieb in Verbindung bringbar ist, bevorzugt das Handrad mittels der Drehmomentübertragungseinrichtung mit dem Mitnehmer in Verbindung bringbar ist. Über die geöffnete Abdeckung in der Bedienkonsole kann somit auf einfache Weise die Handbetätigungseinrichtung von der Außereingriffsstellung in die Eingriffsstellung gebracht werden, wobei eine einfache manuelle Betätigung der Feststellbremse mit einer guten Zugänglichkeit und einer ergonomisch günstigen Betätigung über das aus der Bedienkonsole mit dem Griffabschnitt herausragende Handrad erzielt werden.

Im normalen elektrischen Betrieb befindet sich unterhalb der geschlossenen Abdeckung die Handbetätigungseinrichtung in der Außereingriffsstellung, in der das Handrad auf den Getriebegehäusedeckel aufgesteckt ist. Sofern bei entfernter Abdeckung das auf den Getriebedeckel aufgesteckte Handrad zugänglich ist und von dem Getriebedeckel abgezogen und in die Eingriffstellung gebracht werden kann bzw. auf den Getriebegehäusedeckel in die Außereingriffsstellung aufgesteckt werden kann, kann auf einfache Weise das Handrad aus der aufgesteckten Außereingriffsstellung entnommen werden und zur manuellen Betätigung mittels der Drehmomentübertragungseinrichtung mit dem Mitnehmer in Eingriff gebracht werden.

Besondere Vorteile ergeben sich bei einer Ausbildung des Fahrzeugs als batterie-elektrisch betriebenes Elektrofahrzeug, insbesondere Flurförderzeug. Mit der erfindungsgemäßen Handbetätigungseinrichtung an der elektro-mechanischen Betätigungseinrichtung der Feststellbremse, mit der im elektrischen Betrieb über den Elektromotor die Betätigungskraft zur Beaufschlagung der Feststellbremse in die Bremsstellung erzeugt wird, kann hierbei bei einem Ausfall der Energieversorgungseinheit oder bei einem Betrieb bzw. Transport des Fahrzeugs ohne Energieversorgungseinheit eine gut zugängliche manuelle Betätigung der Feststellbremse mit geringem Bauaufwand erzielt werden.

Weitere Vorteile und Einzelheiten der Erfindung werden anhand des in den schematischen Figuren dargestellten Ausführungsbeispiels näher erläutert. Hierbei zeigt
- Figur 1: ein als Flurförderzeug ausgebildetes Fahrzeugs mit einer erfindungsgemäßen elektrischen Betätigungseinrichtung der Feststellbremse in einer Seitenansicht,
- Figur 2: die erfindungsgemäße elektrische Betätigungseinrichtung der Feststellbremse in einer perspektivischen Darstellung,
- Figur 3: die elektrische Betätigungseinrichtung gemäß der Figur 2 in einem Längsschnitt,
- Figur 4: einen Mitnehmer der Handbetätigungseinrichtung in einer perspektivische Darstellung,
- Figur 5: den Mitnehmer gemäß der Figur 4 in einem teilweisen Längschnitt,
- Figur 6: den Schnitt entlang der Linie A-A der Figur 5,
- Figur 7: den Schnitt entlang der Linie B-B der Figur 5,
- Figur 8: ein Handrad der Handbetätigungseinrichtung in einer perspektivische Darstellung,
- Figur 9: das Handrad gemäß der Figur 9 in einer Seitenansicht,
- Figur 10: das Handrad entlang der Linie A-A der Figur 9,
- Figur 11: das Handrad in einer Ansicht C der Figur 9,
- Figur 12: eine Ansicht einer Bedienkonsole des Fahrzeugs im Bereich der elektrischen Betätigungseinrichtung der Feststellbremse während des normalen Betriebs der Feststellbremse und
- Figuren 13 bis 15: Ansichten einer Bedienkonsole des Fahrzeugs zur manuellen Betätigung der Feststellbremse durch die Handbetätigungseinrichtung.

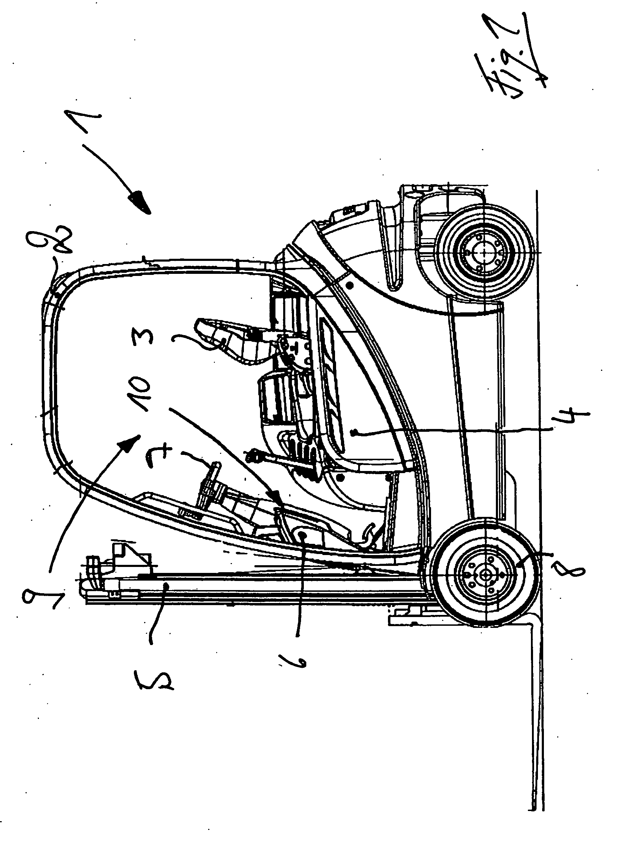

In der Figur 1 ist ein als Gegengewichtsgabelstapler ausgebildetes Flurförderzeug, beispielsweise ein batterie-elektrisch betriebenes Flurförderzeug, als Beispiel eines als Elektrofahrzeugs ausgebildeten Fahrzeugs 1 dargestellt. Innerhalb eines Fahrerschutzdaches 2 ist ein Fahrerarbeitsplatz 9 ausgebildet, der beispielsweise einen Fahrersitz 3 umfasst. Der Fahrersitz 3 kann auf einer Batteriehaube 4 angeordnet sein. Im vorderen, einem Hubmast 5 zugewandten Bereich des Fahrerschutzdaches 2, dem sogenannten Vorderaufbau, ist eine Bedienkonsole 6, beispielsweise ein als Cockpit ausgebildetes Armaturenbrett, als weiterer Bestandteil des Fahrerarbeitsplatzes 9 angeordnet. An der Bedienkonsole 6 ist eine Lenkrad 7 angeordnet. Im Bereich der Bedienkonsole 6 ist erfindungsgemäß eine elektrische Betätigungseinrichtung 10 zur elektrischen Aktuierung einer nicht näher dargestellten Feststellbremse des Fahrzeugs angeordnet. Die Feststellbremse wirkt hierbei auf die angetriebenen Vorderräder 8 des Fahrzeugs und ist an den angetrieben Vorderrädern oder an bzw. in einer Antriebsachse der Vorderräder 8 angeordnet.

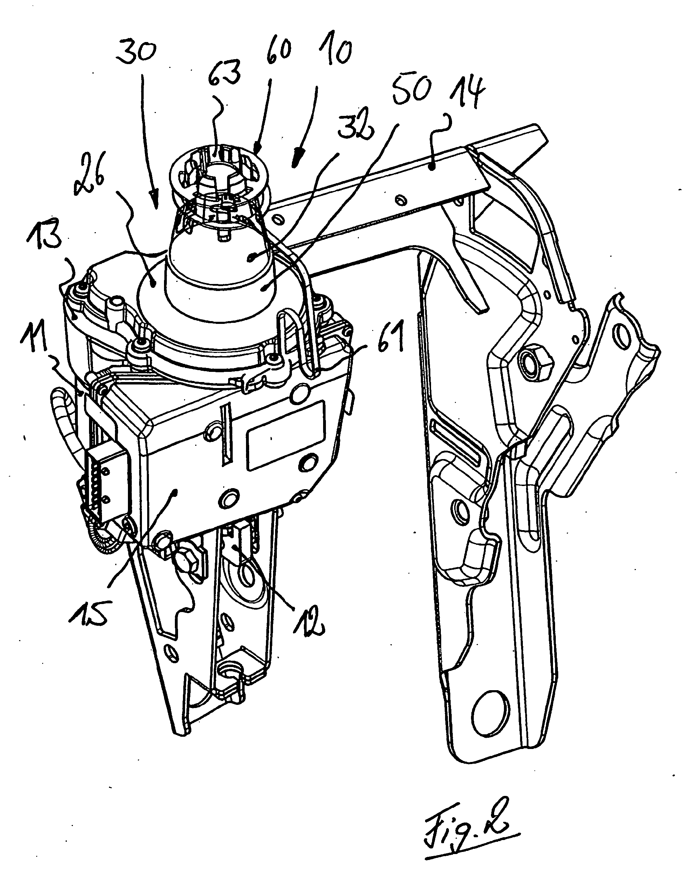

In der Figur 2 ist die elektrische Betätigungseinrichtung 10 der Feststellbremse in einer perspektivischen Darstellung dargestellt. Die elektrische Betätigungseinrichtung 10 umfasst einen Elektromotor 11 als Antrieb und zum Aufbringen der Betätigungskraft zur Beaufschlagung der Feststellbremse in die Bremsstellung, der über ein Untersetzungsgetriebe mit einem Gewindespindeltrieb in trieblicher Verbindung steht. Der Gewindespindeltrieb ist mit einem Halter 12, beispielsweise einem Zuganker, versehen, an dem ein von einem Bremsseil gebildeter Seilzug, beispielsweise ein Bowdenzug, als Übertragungsmittel befestigt werden kann, das die Verbindung zu der Feststellbremse herstellt. Das Untersetzungsgetriebe und der Gewindespindeltrieb sind in einem Getriebegehäuse 13 der Betätigungseinrichtung 10 angeordnet, das mittels einer Befestigungskonsole 14 in dem Vorderaufbau des Flurförderzeugs 1 im Bereich der Bedienkonsole 6 befestigt werden kann. Die elektrische Betätigungseinrichtung 10 umfasst weiterhin eine elektronische Steuerung 16 zur Ansteuerung des Elektromotors 11, die mit einer elektronischen Fahrzeugsteuerung des Fahrzeugs und Sensoreinrichtungen zur Erfassung verschiedener Betriebszustände des Fahrzeugs verbunden sein kann. Mittels der elektronischen Steuerung 16 ist eine automatische Ansteuerung des Elektromotors 11 zur automatischen Betätigung der Feststellbremse in die Bremsstellung bzw. Lösestellung möglich, um automatische Bremsfunktionen in Abhängigkeit von verschiedenen Betriebszuständen und/oder Fahrzuständen bzw. Fahrzeugszustände des Fahrzeugs zu erzielen.

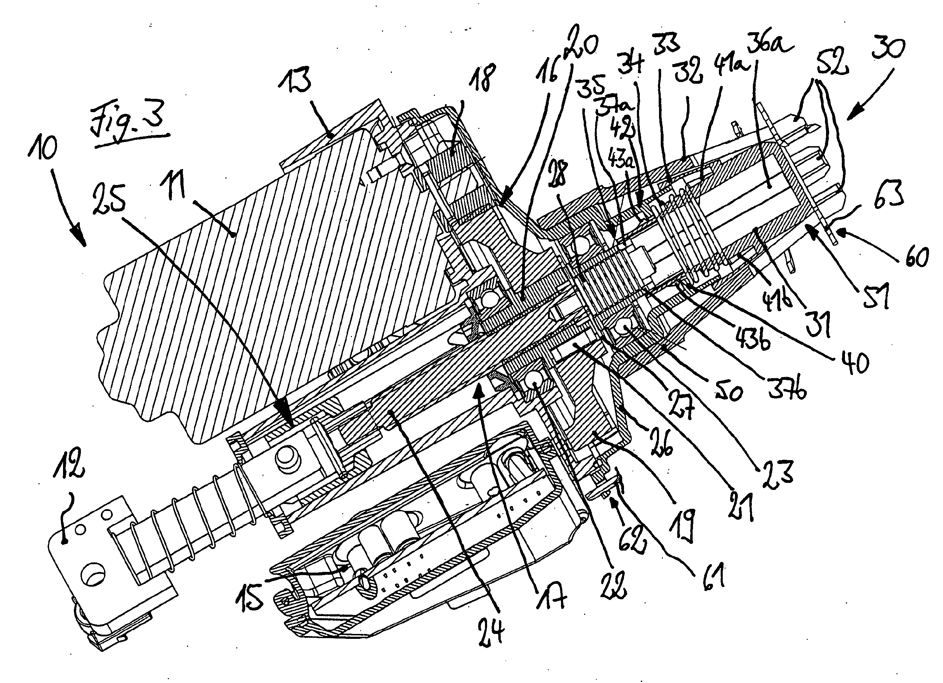

In der Figur 3 ist die elektrische Betätigungseinrichtung 10 in einem Längsschnitt dargestellt. Der an dem Getriebegehäuse 13 befestigte Elektromotor 11 steht hierbei über ein in dem Getriebegehäuse 13 angeordnetes Untersetzungsgetriebe 16 mit dem Gewindespindeltrieb 17 in Wirkverbindung. Das Untersetzungsgetriebe 16 ist von einem als Stirnradgetriebe ausgebildeten Zahnradgetriebe gebildet, das ein an der Abtriebswelle des Elektromotors 11 angeordnetes Antriebsritzel 18 und ein mit dem Antriebsritzel 18 in Eingriff stehendes Zahnrad 19 umfasst. Das Zahnrad 19 ist mit einer Spindelmutter 20 des Gewindespindeltriebs 17 drehfest verbunden, beispielsweise mittels einer in der Figur 3 dargestellten Passfeder 21. Die Spindelmutter 20 ist mittels Lagerungen 22, 23 in dem Getriebegehäuse 13 drehbar gelagert. Innerhalb der Spindelmutter 20 ist eine Gewindespindel 24 des Gewindespindeltriebs 17 längsverschiebbar angeordnet, wobei ein selbsthemmendes Gewinde zwischen der Spindelmutter 20 und der Gewindespindel 24 ausgebildet ist. An der Gewindespindel 24 ist hierbei an dem in der Figur 3 linken, unteren Ende der als Zuganker ausgebildete Halter 12 über eine entsprechende Befestigungsvorrichtung 25 befestigt, der mit dem nicht näher dargestellten, als Bremsseil ausgebildeten Übertragungsmittel mit der Feststellbremse in Verbindung steht. Am oberen Ende der Gewindespindel 24 ist ein von einem Tellerfederpaket 28 gebildeter gefederter Anschlag für die vollständig nach unten beaufschlagte Gewindespindel 24 ausgebildet. Das Zahnrad 19 ist hierbei an der unteren Stirnseite an einem Wellenabsatz der Spindelmutter 20 angeordnet und mittels eines als Querbolzen ausgebildeten Halters 27 an der oberen Stirnseite an der Spindelmutter 20 axial befestigt. Der Halter 27 erstreckt sich an der Spindelmutter 20 nach radial Innen. In der in der Figur 3 dargestellten Stellung mit vollständig nach unten betätigter Gewindespindel 24 gelangt das an der Gewindespindel 24 angeordnete Tellerfederpaket 28 mit dem Halter 27 in Anlage, wodurch ein gefederter Anschlag für die nach unten ausgefahrene Gewindespindel 24 erzielt wird.

Das Getriebegehäuse 13 weist an der Oberseite einen Getriebegehäusedeckel 26 auf. Der Elektromotor 11, die elektronische Steuerung 15 und der Halter 12 sind hierbei unterhalb des Untersetzungsbetriebes 16 angeordnet.

Im normalen elektrischen Betrieb der Betätigungseinrichtung 10 mit einer elektrischen aktuierten Betätigung der Feststellbremse wird von dem Elektromotor 11 über das Untersetzungsgetriebe 16 und den Gewindespindeltrieb 17 die Betätigungskraft auf das an dem Halter 12 befestigte Bremsseil übertragen, um die Feststellbremse in die Bremsstellung zu beaufschlagen.

Erfindungsgemäß ist weiterhin eine Handbetätigungseinrichtung 30 vorgesehen, mittels der die Betätigungseinrichtung 10 bei einem Stromausfall oder bei fehlender Energieversorgung manuell betätigt werden kann, um die Feststellbremse manuell und dosiert in die Bremsstellung bzw. die Lösestellung zu beaufschlagen. Die Handbetätigungseinrichtung 30 ist im Bereich des Getriebegehäusedeckels 26 des Getriebegehäuses 13 und somit oberhalb des Untersetzungsgetriebes 16 angeordnet.

Die Handbetätigungseinrichtung 30 weist einen Mitnehmer 31 auf, der mit der Spindelmutter 20 des Gewindespindeltriebs 17 zu deren Antrieb in Wirkverbindung bringbar ist, und ein Handrad 32 zur Betätigung des Mitnehmers 31 auf. In den Figuren 2 und 3 ist die elektrische Betätigungseinrichtung 10 in einer Außereingriffsstellung während des normalen elektrischen Betriebs der Betätigungseinrichtung 10 dargestellt, in der die Handbetätigungseinrichtung 30 außer Funktion ist.

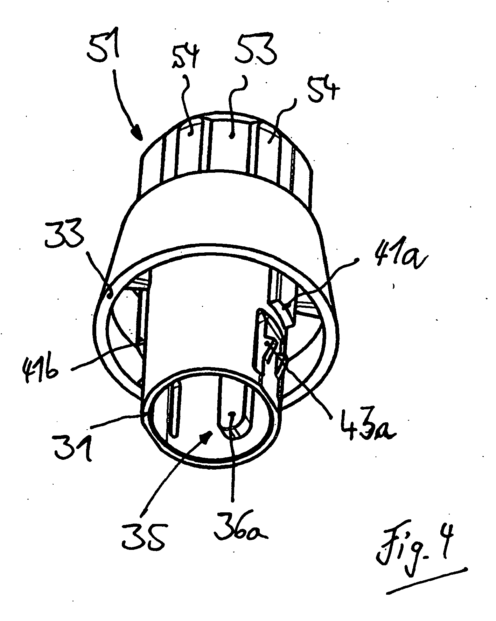

Der Mitnehmer 31 der Handbetätigungseinrichtung 30 ist in den Figuren 4 bis 7 näher dargestellt. Der Mitnehmer 31 ist von einem rohrförmigen Grundkörper gebildet, der über eine Drehmomentübertragungseinrichtung 35 mit der Spindelmutter 20 in Verbindung bringbar ist, die am Innendurchmesser des Mitnehmers 31 und am oberen Ende der Spindelmutter 20 ausgebildet ist. Die Drehmomentübertragungseinrichtung 35 ist hierbei von zwei gegenüberliegend um 180° versetzt angeordneten, nach Innen ragenden Klauen 36a, 36b am Innenumfang des Mitnehmers 31 gebildet, wobei die Klauen 36a, 36b mit entsprechenden Nuten 37a, 37b am oberen Ende der Spindelmutter 20 - siehe Figur 3 - in Eingriff bringbar sind. Die Klauen 36a, 36b erstrecken sich hierbei in Längsrichtung des Mitnehmers 31.

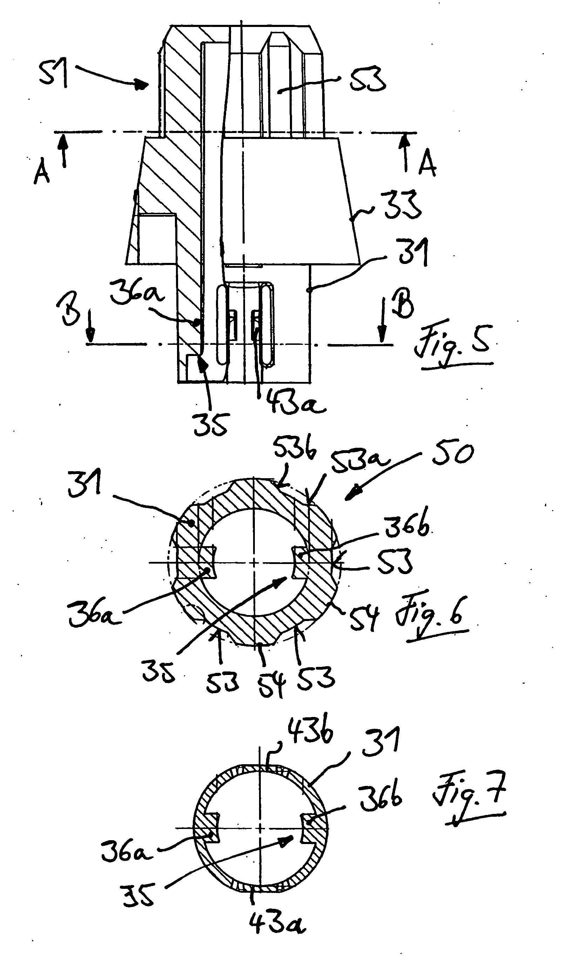

In der Figur 3 befindet sich der Mitnehmer 31 und somit die Handbetätigungseinrichtung 30 in der Außereingriffsstellung. Der Mitnehmer 31 ist an einem rohrförmigen oberen Abschnitt des Getriebegehäusedeckels 26 mittels eines krempenförmigen Abschnitts 33 in Längsrichtung der Gewindespindel 24 längsverschiebbar angeordnet und mittels einer Federeinrichtung 34 nach oben in die Außereingriffstellung beaufschlagt, in der die Klauen 36a, 36b des Mitnehmers 31 außer Eingriff mit den Nuten 37a, 37b der Spindelmutter 20 sind und somit die Drehmomentübertragungseinrichtung 35 getrennt sind. Die Federeinrichtung 34 ist hierzu zwischen einem nach radial Innen gerichteten Vorsprung 40 an dem rohrförmigen oberen Abschnitt des Getriebegehäusedeckels 26 und dem Mitnehmer 31 angeordnet. Der Mitnehmer 31 ist zur Abstützung der Federeinrichtung 34 mit zwei gegenüberliegend angeordneten, sich nach radial Außen erstreckenden Anschlagnasen 41 a, 41 b versehen, die - wie aus der Figur 4 ersichtlich sind - am Außenumfang des Grundkörpers innerhalb der krempenförmigen Erweiterung 33 angeordnet sind. Für die in der Figur 3 dargestellte Außereingriffsstellung des Mitnehmers 31 ist weiterhin zwischen dem Getriebegehäusedeckel 26 und dem Mitnehmer 31 ein Anschlag 42 ausgebildet, der von dem Vorsprung 40 des rohrförmigen oberen Abschnitts des Getriebegehäusedeckels 26 und zwei Rastnasen 43a, 43b an dem Mitnehmer 31 gebildet ist. Im Bereich der Rastnasen 43a, 43b ist der Mitnehmer 31 - wie insbesondere in der Figur 5 ersichtlich ist - mit Längsaussparungen versehen, so dass die Rastnasen 43a, 43b elastisch ausgebildet sind.

Der Mitnehmer 31 ist mit dem Innendurchmesser derart bemessen, dass der Mitnehmer 31 durch Drücken auf das obere Ende entgegen der Kraft der Federeinrichtung 34 nach unten verschoben und auf das obere Ende der Gewindespindel 24 aufgeschoben werden kann, wodurch die Klauen 36a, 36b des Mitnehmers 31 mit den Nuten 37a, 37b der Gewindespindel 24 in Eingriff miteinander gelangen und die Drehmomentübertragungseinrichtung 35 gekuppelt werden kann.

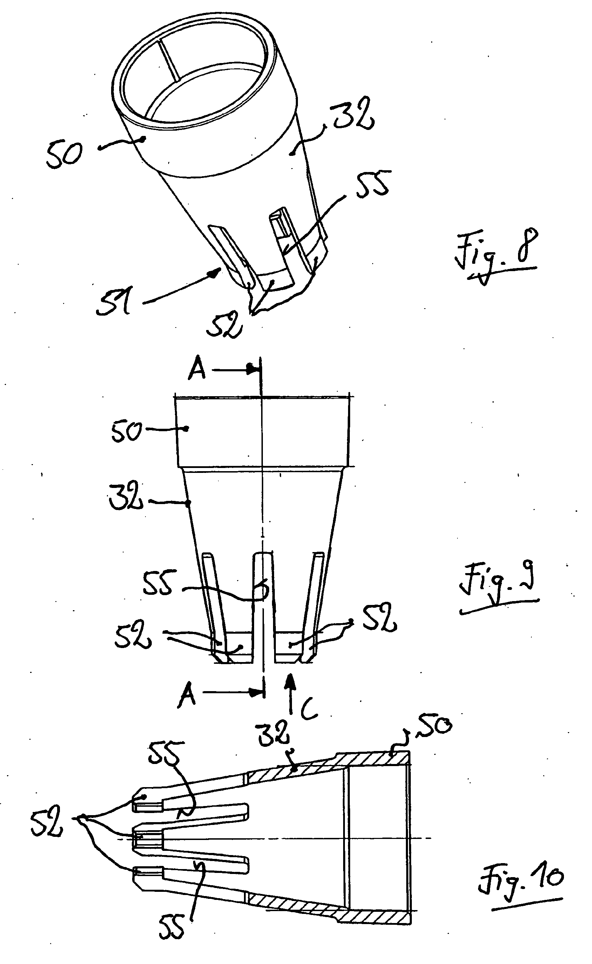

Das Handrad 32 der Handbetätigungseinrichtung 30 ist in den Figuren 8 bis 11 näher dargestellt. Das Handrad 32 ist von einem kegelförmigen Grundkörper gebildet, an dessen einem Ende ein Griffabschnitt 50 ausgebildet ist, der beispielsweise zylindrisch gestaltet ist. Zwischen dem Mitnehmer 31 und dem Handrad 32 ist eine Drehmomentübertragungseinrichtung 51 ausgebildet, mittels der bei einer Betätigung des Handrades 32 über den Mitnehmer 31 die Spindelmutter 20 betätigt werden. Die Drehmomentübertragungseinrichtung 51 ist von einer keilwellenartigen Verbindung gebildet, die von mehreren elastischen Mitnehmerzungen 52 an dem Handrad 32 und radialen, längsnutförmigen Einbuchtungen 53 an dem Mitnehmer 31 gebildet ist, die die Mitnehmerzungen 52 aufnehmen.

Die radialen, nutförmigen Einbuchtungen 53 an dem Mitnehmer 31 sind - wie in den Figuren 4 bis 6 dargestellt ist - an dem Mitnehmer 31 an dessen oberen, deckelförmigen Abschnitt oberhalb der krempenförmigen Erweiterung 33 am Außenumfang des Mitnehmers 31 als Längsnuten ausgebildet. Im vorliegenden Ausführungsbeispiel sind beispielsweise sechs über den Umfang gleichmäßig verteilte Einbuchtungen 53 am Mitnehmer 31 ausgebildet, zwischen denen jeweils eine nockenförmige Erhebung 54 ausgebildet ist. Die seitlichen Flankenabschnitte 53a, 53b der Einbuchtungen 53 sind jeweils geneigt ausgebildet.

An dem Handrad 32 sind entsprechend dem dargestellten Ausführungsbeispiel sechs Mitnehmerzungen 52 ausgebildet, die an dem dem Griffabschnitt 50 gegenüberliegenden Ende des Handrades 32 ausgebildet sind und somit gegenüberliegend zu dem Griffabschnitt 50 an dem Handrad 32 angeordnet sind. Zwischen den Mitnehmerzungen 52 ist jeweils eine längsnutförmige Aussparung 55 an dem Handrad 32 ausgebildet, wodurch die Mitnehmerzungen 52 elastisch verformbar sind und blattfederartige Federzungen bilden.

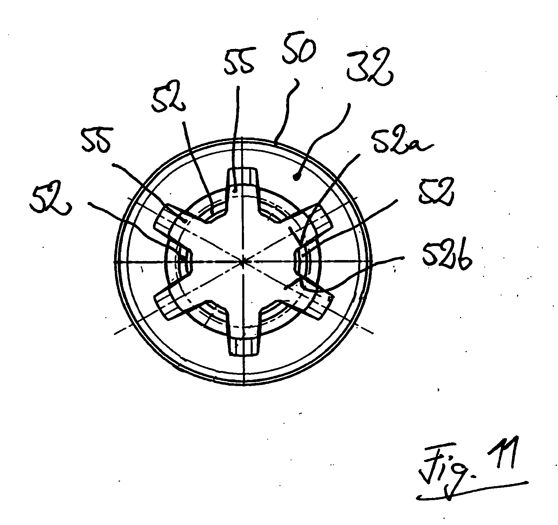

Wie in der Figur 11 ersichtlich ist, weisen die Mitnehmerzungen 52 an dem mit den Einbuchtungen 53 zusammenwirkenden Ende ebenfalls geneigte seitliche Flankenabschnitte 52a, 52b auf.

Im normalen elektrischen und automatischen Betrieb der elektrischen Betätigungseinrichtung 10 und somit in der Außereingriffsstellung der Handbetätigungseinrichtung 10 ist das Handrad 32 - wie in den Figuren 2 und 3 dargestellt ist - mit dem Griffabschnitt 50 auf den rohrförmigen oberen Abschnitt des Getriebegehäusedeckels 26 aufgesteckt. In dieser Außereingriffsstellung des Handrades 32 ist das Handrad 32 über den Mitnehmer 31 gestülpt, so dass sich in der Außereingriffsstellung ein geringer Bauraumbedarf der Handbetätigungseinrichtung 30 in Längsrichtung des Gewindespindeltriebs 17 ergibt. In dieser aufgesteckten, platzsparenden Außereingriffsstellung des Handrades 32 ist das Handrad 32 mittels einer Verliersicherung 60 an der Betätigungseinrichtung 10 gegen einen Verlust gesichert. Die Verliersicherung 60 ist von einer flexiblen Kunststofflasche 61 gebildet, die an der Betätigungseinrichtung 10, beispielsweise dem Getriebegehäusedeckel 26, befestigt ist und mit dem Handrad 32 in Verbindung bringbar ist. Zur Befestigung der Kunststofflasche 61 an dem Getriebegehäusedeckel 26 ist bevorzugt eine Rast- oder Clipverbindung 62 vorgesehen. Zur Sicherung des Handrades 32 ist die Kunststofflasche 61 mit einem Kranz 63 versehen, der auf die Mitnehmerzungen 52 des Handrades 32 aufgesteckt werden kann und in die Aussparungen 55 eingreift.

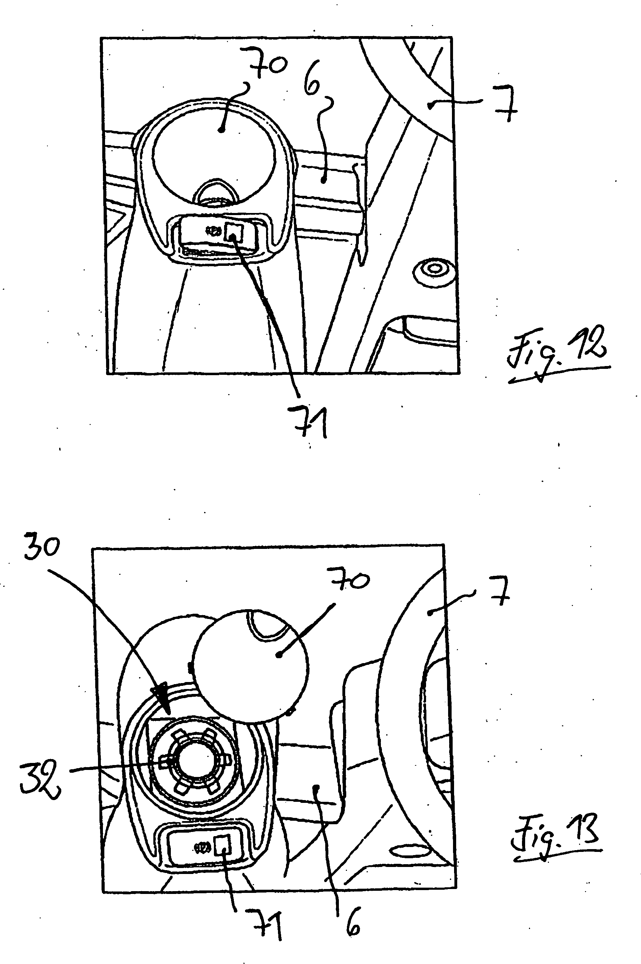

Die Betätigungseinrichtung 10 ist - wie in den Figuren 12 bis 15 dargestellt ist - an der von dem Armaturenbrett gebildeten Bedienkonsole 6 seitlich neben dem Lenkrad 7 unterhalb einer von einem Deckel gebildeten entfernbaren Abdeckung 70 angeordnet. In der Figur 12 ist der Abdeckung 70 in einer geschlossenen Stellung während des normalen elektrischen Betriebs der Betätigungseinrichtung 10 dargestellt. Unterhalb der Abdeckung 70 ist die Betätigungseinrichtung 10 in der in der Figur 2 und 3 dargestellten Außereingriffstellung der Handbetätigungseinrichtung 30 angeordnet, wobei der Mitnehmer 31 mittels der Federeinrichtung 34 außer Eingriff mit der Spindelmutter 20 ist und somit die Drehmomentübertragungseinrichtung 35 getrennt ist und das Handrad 32 mit dem Griffabschnitt 50 auf den Getriebegehäusedeckel 26 in platzsparender Weise aufgesteckt ist. Zur Ansteuerung der elektrischen Betätigungseinrichtung 10 ist ein Betätigungselement 71, beispielsweise ein als Tastschalter ausgebildetes Schaltelement, vorgesehen, so dass durch Betätigen des Betätigungselements 71 die Feststellbremse durch Ansteuerung des Elektromotors 11 in die Bremsstellung bzw. die Lösestellung betätigt werden kann.

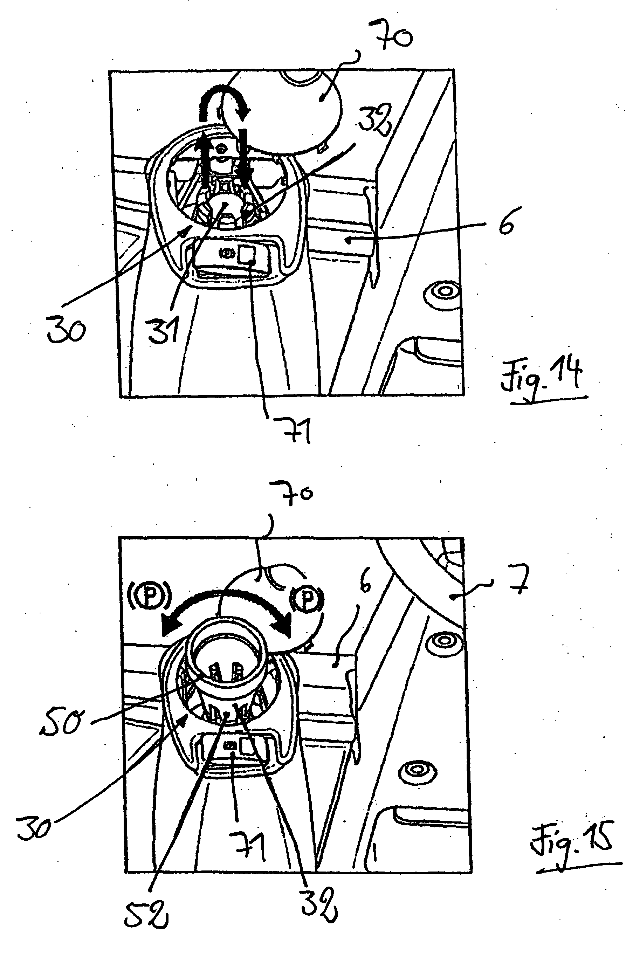

Zur manuellen Betätigung der Feststellbremse mittels des Handrades 32 ist die Abdeckung 70 zu entfernen, beispielsweise durch seitliches Verschieben bzw. Verschwenken des Deckels, wie in der Figur 13 dargestellt ist. Anschließend kann das auf den Getriebegehäusedeckel 26 in der Außereingriffsstellung aufgesteckte Handrad 32 - wie in der Figuren 14 durch die Pfeile verdeutlicht ist - abgezogen werden und durch Drehen um 180° Grad mit den Mitnehmerzungen 52 auf die Einbuchtungen 53 des Mitnehmers 31 aufgesteckt werden und in eine Eingriffstellung gebracht werden - wie in der Figur 15 dargestellt ist. In der in der Figur 15 dargestellten Eingriffsstellung der Handbetätigungseinrichtung 30 kann über die von den Mitnehmerzungen 52 und den Einbuchtungen 53 gebildete Drehmomentübertragungseinrichtung 51 eine Drehbewegung des Handrades 32 an dem Griffelement 50 auf den Mitnehmer 31 übertragen wird. Durch ein Drücken auf das Handrad 32 kann hierbei der Mitnehmer 31 entgegen der Kraft der Federeinrichtung 34 nach unten gedrückt werden, um eine Verbindung des Mitnehmers 31 mit der Spindelmutter 20 über die von den Klauen 36a, 36b an dem Mitnehmer 31 und den Nuten 37a, 37b an der Spindelmutter 20 gebildete Drehmomentübertragungseinrichtung 35 zu erzielen. Das Handrad 32 kann somit über den Mitnehmer 31 mit der Spindelmutter 20 des Gewindespindeltriebs 17 in triebliche Verbindung gebracht werden.

Durch Drehen des Handrades 32 an dem aus der Bedienkonsole 6 herausragenden Griffabschnitt 50 kann somit über den Mitnehmer 31 die Spindelmutter 20 des Gewindespindeltriebes 17 betätigt werden, um bei fehlender Energieversorgung, beispielsweise einem Ausfall der Stromversorgung oder einem Betrieb des Flurförderzeugs ohne Batterieblock, die Feststellbremse manuell in die Bremsstellung bzw. die Lösestellung betätigen zu können.

Die Drehmomentübertragung von dem Handrad 32 auf den Mitnehmer 31 erfolgt hierbei kraftschlüssig über die geneigten seitlichen Flankenabschnitte 52a, 52b der Mitnehmerzungen 52 des Handrades 31 und die geneigten seitlichen Flankenabschnitte 53a, 53b der Einbuchtungen 53 des Mitnehmers 31. Die Flankenwinkel an den Einbuchtungen 53 und die Federeigenschaften der als Federzungen ausgebildeten Mitnehmerzungen 52 sind hierbei derart aufeinander abgestimmt, dass eine Drehmomentbegrenzung für das manuell auf das Handrad 32 aufgebrachte Drehmoment erzielt wird, so dass bei einem Überschreiten des aufgebrachten Drehmoments die Mitnehmerzungen 52 elastisch aufgebogen und nach Außen verformt werden, so dass die Mitnehmerzungen 52 über die nockenförmigen Erhebungen 64 zwischen den Einbuchtungen 53 an dem Mitnehmer 31 gleiten und somit die Mitnehmerzungen 52 die Einbuchtungen 53 überspringen. Eine Überlastung durch ein zu hohes an dem Handrad 32 aufgebrachtes Drehmoment kann somit wirksam vermieden werden.

Mittels der von der flexiblen Kunststofllasche 61 gebildeten Verliersicherung 60 kann hierbei das Handrad 32 ebenfalls in der auf den Mitnehmer 31 aufgesteckten und in der Figur 15 dargestellten Eingriffstellung auf einfache Weise gegen einen Verlust gesichert werden.

Mit der von dem Handrad 32 und dem Mitnehmer 31 gebildeten Handbetätigungseinrichtung 30 kann mit geringem Bauaufwand eine zusätzliche manuelle Betätigung der von der elektro-mechanischen Betätigungseinrichtung 10 elektrisch aktuierten Feststellbremse gebildet werden. Bevorzugt Ist der Mitnehmer 31 und das Handrad 32 von Kunststoffbauteilen gebildet, so dass das Handrad 32 und der Mitnehmer 31 und somit Handbetätigungseinrichtung 30 einen einfachen Aufbau mit geringen Herstellkosten verursachen. Durch die Anordnung der elektrischen Betätigungseinrichtung 10 in der Bedienkonsole 6 ist eine einfache und ergonomisch günstige sowie gut zugängliche Anordnung der Betätigungseinrichtung 10 im Handbetrieb durch das Handrad 32 erzielbar, wobei sich das Handrad 32 im Komfortfeld der auf dem Fahrersitz 3 sitzenden Bedienperson befindet und von der auf dem Fahrersitz 3 sitzenden Bedienperson in ergonomisch günstiger Weise betätigt werden kann.

Durch die Anordnung der elektrischen Betätigungseinrichtung 10 mit der erfindungsgemäßen Handbetätigungseinrichtung 30 im Bereich der Bedienkonsole 6 kann die erfindungsgemäße elektrische Betätigungseinrichtung 10 auf einfache Weise bei Fahrzeugen mit einer als Handhebel ausgebildeten manuell betätigbaren Feststellbremse gegen den Handhebel ausgetauscht werden und somit eine elektrische Betätigungseinrichtung 10 mit der zusätzlichen Handbetätigungseinrichtung 30 auf einfache Weise nachgerüstet werden.

Anstelle der Anordnung der Betätigungseinrichtung 10 in der Bedienkonsole 6 ist ebenfalls eine Anordnung seitlich neben dem Fahrersitz auf einer Motor- oder Batteriehaube im Komfortfeld der Bedienperson möglich.

## Patentansprüche

1. Fahrzeug (1), insbesondere Elektrofahrzeug, mit einer elektrisch betätigten Feststellbremse, wobei die Feststellbremse mittels einer elektrischen im Fahrerarbeitsplatzbereich (9) angeordneten Betätigungseinrichtung (10) betätigbar ist, die einen Elektromotor (11) und einen mit dem Elektromotor (11) trieblich verbundenen Gewindespindeltrieb (17), insbesondere einen selbsthemmenden Gewindespindeltrieb, umfasst, wobei der Gewindespindeltrieb (17) mit einem Übertragungsmittel, insbesondere einem Bremsseil, mit der Feststellbremse zu deren Betätigung in Wirkverbindung steht, wobei zur Betätigung der elektrischen Betätigungseinrichtung (10) ein Betätigungselement (71) vorgesehen ist, **dadurch gekennzeichnet, dass** an der elektrischen Betätigungseinrichtung (10) eine Handbetätigungseinrichtung (30) zur manuellen Betätigung der Feststellbremse in eine Bremsstellung bzw. eine Lösestellung bei fehlender Energieversorgung vorgesehen ist, wobei die Handbetätigungseinrichtung (30) auf eine von dem Elektromotor (11) angetriebene Spindelmutter (20) des Gewindespindeltriebs (17) wirkt.

2. Fahrzeug nach Anspruch 1, **dadurch gekennzeichnet, dass** die Handbetätigungseinrichtung (30) ein Handrad (32) umfasst, das zur manuellen Betätigung mit dem Gewindespindeltrieb (17) der elektrischen Betätigungseinrichtung (10) in Wirkverbindung bringbar ist.

3. Fahrzeug nach Anspruch 1 oder 2, **dadurch gekennzeichnet, dass** der Gewindespindeltrieb (17) die mittels des Elektromotors (11) angetriebene Spindelmutter (20) und eine Gewindespindel (24) umfasst, die mit dem Übertragungsmittel verbunden ist, wobei das Handrad (32) zur manuellen Betätigung mit der Spindelmutter (20) in Wirkverbindung bringbar ist.

4. Fahrzeug nach einem der Ansprüche 1 bis 3, **dadurch gekennzeichnet, dass** für den elektrischen Betrieb der Betätigungseinrichtung (10) eine Außereingriffsstellung der Handbetätigungseinrichtung (30) vorgesehen ist.

5. Fahrzeug nach einem der Ansprüche 1 bis 4, **dadurch gekennzeichnet, dass** die Handbetätigungseinrichtung (30) einen Mitnehmer (31) umfasst, der mit der Spindelmutter (20) in Verbindung bringbar ist.

6. Fahrzeug nach Anspruch 5, **dadurch gekennzeichnet, dass** der Mitnehmer (31) mittels des Handrades (32) betätigbar ist.

7. Fahrzeug nach Anspruch 5 und 6, **dadurch gekennzeichnet, dass** zwischen dem Mitnehmer (31) und der Spindelmutter (20) eine Drehmomentübertragungseinrichtung (35) ausgebildet ist.

8. Fahrzeug nach Anspruch 7, **dadurch gekennzeichnet, dass** die Drehmomentübertragungseinrichtung (35) von mindestens einer Klaue (36a; 36b) des Mitnehmers (31) und einer mit der Klaue (36a; 36b) zusammenwirkenden Nut (37a; 37b) der Spindelmutter (20) gebildet ist.

9. Fahrzeug nach einem der Ansprüche 6 bis 8, **dadurch gekennzeichnet, dass** zwischen dem Handrad (32) und dem Mitnehmer (31) eine Drehmomentübertragungseinrichtung (51) ausgebildet ist.

10. Fahrzeug nach Anspruch 9. **dadurch gekennzeichnet, dass** die Drehmomentübertragungseinrichtung (51) von mindestens einer radialen, nutförmigen Einbuchtung (53) an dem Mitnehmer (31) und jeweils einer mit der Einbuchtung (53) in Eingriff bringbaren Mitnehmerzunge (52) des Handrades (32) gebildet ist.

11. Fahrzeug nach Anspruch 10, **dadurch gekennzeichnet, dass** die Mitnehmerzungen (52) an dem Handrad (32) gegenüberliegend zu einem Griffabschnitt (50) angeordnet sind.

12. Fahrzeug nach Anspruch 10 oder 11, **dadurch gekennzeichnet, dass** die Einbuchtung (53) des Mitnehmers (31) mit geneigten seitlichen Flankenabschnitten (53a; 53b) versehen ist und die Mitnehmerzunge (52) des Handrades (32) elastisch verformbar ist, wobei die Vorspannung der Mitnehmerzunge (52) und die Flankenwinkel der seitlichen Flankenabschnitte (53a; 53b) der Einbuchtung (53) derart abgestimmt sind, dass eine Drehmomentbegrenzung für das an dem Handrad (32) aufgebrachte manuelle Drehmoment erzielbar ist.

13. Fahrzeug nach einem der Ansprüche 5 bis 12, **dadurch gekennzeichnet, dass** der Mitnehmer (31) im Bereich eines Getriebegehäusedeckels (26) des Gewindespindeltriebs (17) längsverschiebbar angeordnet ist, wobei zwischen dem Getriebegehäusedeckel (26) und dem Mitnehmer (31) eine Federeinrichtung (34) angeordnet ist, die den Mitnehmer (31) in die Außereingriffsstellung beaufschlagt, in der die Drehmomentübertragungseinrichtung (35) zu der Spindelmutter (20) getrennt ist.

14. Fahrzeug nach Anspruch 13, **dadurch gekennzeichnet, dass** zwischen dem Getriebegehäusedeckel (26) und dem Mitnehmer (31) ein Anschlag (42) für die Außereingriffsstellung des Mitnehmers (31) ausgebildet ist.

15. Fahrzeug nach Anspruch 14, **dadurch gekennzeichnet, dass** der Anschlag (42) von mindestens einer Rastnase (43a; 43b) des Mitnehmers (31) gebildet ist, die mit einem Vorsprung (40) an dem Getriebegehäusedeckel (26) in Wirkverbindung bringbar ist.

16. Fahrzeug nach einem der Ansprüche 2 bis 15, **dadurch gekennzeichnet, dass** das Handrad (32) mit einem Griffabschnitt (50) in der Außereingriffsstellung der Handbetätigungseinrichtung (30) auf einen Getriebegehäusedeckel (26) des Gewindespindeltriebs (17) aufsteckbar ist.

17. Fahrzeug nach Anspruch 16, **dadurch gekennzeichnet, dass** in der Außereingriffsstellung das Handrad (32) über den Mitnehmer (31) gestülpt ist.

18. Fahrzeug nach Anspruch 16 oder 17, **dadurch gekennzeichnet, dass** das Handrad (32) mittels einer Verliersicherung (60), insbesondere einer flexiblen Kunststofflasche (61), an der elektrischen Betätigungseinrichtung (10) gesichert ist.

19. Fahrzeug nach einem der Ansprüche 1 bis 18, **dadurch gekennzeichnet, dass** die elektrische Betätigungseinrichtung (10) im Bereich einer Bedienkonsole (6), insbesondere eines Armaturenbretts, des Fahrerarbeitsplatzes (9) angeordnet ist.

20. Fahrzeug nach Anspruch 19, **dadurch gekennzeichnet, dass** die elektrische Betätigungseinrichtung (10) an der Bedienkonsole (6) unterhalb einer entfernbaren Abdeckung (70), insbesondere eines Deckels, angeordnet ist, wobei bei entfernter Abdeckung (70) die Handbetätigungseinrichtung (30) zur manuellen Betätigung der Feststellbremse in eine *Eingriffstellung bringbar ist, insbesondere das Handrad (32) mit dem Gewindespindeltrieb (17) in Verbindung bringbar ist, bevorzugt das Handrad (32) mittels der Drehmomentübertragungseinrichtung (51) mit dem Mitnehmer (31) in Verbindung bringbar ist.

21. Fahrzeug nach Anspruch 20, **dadurch gekennzeichnet, dass** bei entfernter Abdeckung (70) das auf den Getriebegehäusedeckel (26) aufgesteckte Handrad (32) zugänglich ist und von dem Getriebegehäusedeckel (26) abgezogen und in die Eingriffsstellung gebracht werden kann bzw. auf den Getriebegehäusedeckel (26) in die Außereingriffsstellung aufgesteckt werden kann.

22. Fahrzeug nach einem der Ansprüche 1 bis 21, **dadurch gekennzeichnet, dass** das Fahrzeug als batterie-elektrisch betriebenes Elektrofahrzeug, insbesondere Flurförderzeug, ausgebildet ist.

## Claims

1. Vehicle (1), in particular electric vehicle, with an electrically actuated parking brake, the parking brake being actuatable by means of an electrical actuating device (10) which is arranged in the driver's workstation region (9) and comprises an electric motor (11) and a threaded spindle drive (17), which is drive-connected to the electric motor (11), in particular a self-inhibiting threaded spindle drive, the threaded spindle drive (17) being operatively connected to the parking brake for actuation thereof by a transmission means, in particular a brake cable, an actuating element (71) being provided for actuating the electrical actuating device (10), **characterized in that** a manual actuating device (30) for manually actuating the parking brake so as to move it into a braking position or a release position in the event of a lack of power supply is provided on the electrical actuating device (10), the manual actuating device (30) acting on a spindle nut (20) of the threaded spindle drive (17), said spindle nut being driven by the electric motor (11).

2. Vehicle according to Claim 1, **characterized in that** the manual actuating device (30) comprises a handwheel (32), which can be operatively connected, for manual actuation, to the threaded spindle drive (17) of the electrical actuating device (10).

3. Vehicle according to Claim 1 or 2, **characterized in that** the threaded spindle drive (17) comprises the spindle nut (20) driven by means of the electric motor (11) and a threaded spindle (24), which is connected to the transmission means, it being possible for the handwheel (32) to be operatively connected to the spindle nut (20) for manual actuation.

4. Vehicle according to one of Claims 1 to 3, **characterized in that** an out-of-engagement position of the manual actuating device (30) is provided for the electric operation of the actuating device (10).

5. Vehicle according to one of Claims 1 to 4, **characterized in that** the manual actuating device (30) comprises a driver (31), which can be connected to the spindle nut (20).

6. Vehicle according to Claim 5, **characterized in that** the driver (31) can be actuated by means of the handwheel (32).

7. Vehicle according to Claims 5 and 6, **characterized in that** a torque transmission device (35) is formed between the driver (31) and the spindle nut (20).

8. Vehicle according to Claim 7, **characterized in that** the torque transmission device (35) is formed by at least one claw (36a; 36b) of the driver (31) and a groove (37a; 37b) in the spindle nut (20), said groove interacting with the claw (36a; 36b).

9. Vehicle according to one of Claims 6 to 8, **characterized in that** a torque transmission device (51) is formed between the handwheel (32) and the driver (31).

10. Vehicle according to Claim 9, **characterized in that** the torque transmission device (51) is formed by at least one radial, groove-shaped recess (53) in the driver (31) and in each case one driver tongue (52) of the handwheel (32), it being possible for said driver tongue to be brought into engagement with the recess (53) .

11. Vehicle according to Claim 10, **characterized in that** the driver tongues (52) are arranged on the handwheel (32) opposite a grip section (50).

12. Vehicle according to Claim 10 or 11, **characterized in that** the recess (53) in the driver (31) is provided with inclined, lateral flank sections (53a; 53b), and the driver tongue (52) of the handwheel (32) is elastically deformable, the prestress on the driver tongue (52) and the flank angles of the lateral flank sections (53a; 53b) of the recess (53) being matched in such a way that torque limitation for the manual torque applied to the handwheel (32) can be achieved.

13. Vehicle according to one of Claims 5 to 12, **characterized in that** the driver (31) is arranged in longitudinally displaceable fashion in the region of a transmission box cover (26) of the threaded spindle drive (17), with a spring device (34) being arranged between the transmission box cover (26) and the driver (31), said spring device acting on the driver (31) so as to move it into the out-of-engagement position, in which the torque transmission device (35) is separate from the spindle nut (20).

14. Vehicle according to Claim 13, **characterized in that** a stop (42) for the out-of-engagement position of the driver (31) is formed between the transmission box cover (26) and the driver (31).

15. Vehicle according to Claim 14, **characterized in that** the stop (42) is formed by at least one latching tab (43a; 43b) of the driver (31), it being possible for said latching tab to be operatively connected to a projection (40) on the transmission box cover (26).

16. Vehicle according to one of Claims 2 to 15, **characterized in that** the handwheel (32) with a grip section (50) in the out-of-engagement position of the manual actuating device (30) can be plugged onto a transmission box cover (26) of the threaded spindle drive (17).

17. Vehicle according to Claim 16, **characterized in that**, in the out-of-engagement position, the handwheel (32) has been pulled over the driver (31).

18. Vehicle according to Claim 16 or 17, **characterized in that** the handwheel (32) is secured on the electrical actuating device (10) by means of a loss prevention means (60), in particular a flexible plastic lug (61).

19. Vehicle according to one of Claims 1 to 18, **characterized in that** the electrical actuating device (10) is arranged in the region of a control console (6), in particular an instrument panel, of the driver's workstation (9).

20. Vehicle according to Claim 19, **characterized in that** the electrical actuating device (10) is arranged on the control console (6) beneath a removable cover (70), in particular a lid, wherein when the cover (70) is removed, the manual actuating device (30) can be brought into an engagement position for manually actuating the parking brake, in particular the handwheel (32) can be connected to the threaded spindle drive (17), preferably the handwheel (32) can be connected to the driver (31) by means of the torque transmission device (51).

21. Vehicle according to Claim 20, **characterized in that**, when the cover (70) is removed, the handwheel (32), which has been plugged onto the transmission box cover (26), is accessible and can be withdrawn from the transmission box cover (26) and brought into the engagement position or can be plugged onto the transmission box cover (26) into the out-of-engagement position.

22. Vehicle according to one of Claims 1 to 21, **characterized in that** the vehicle is in the form of a battery-powered electrically operated electric vehicle, in particular an industrial truck.

## Revendications

1. Véhicule (1), en particulier véhicule électrique, comprenant un frein de stationnement à commande électrique, le frein de stationnement pouvant être commandé au moyen d'un dispositif de commande électrique (10) disposé dans la région du poste de travail du conducteur (9), lequel dispositif de commande électrique comprend un moteur électrique (11) et un entraînement à broche filetée (17) connecté par entraînement au moteur électrique (11), en particulier un entraînement à broche filetée autobloquant, l'entraînement à broche filetée (17) étant en liaison fonctionnelle par le biais d'un moyen de transmission, en particulier un câble de freinage, avec le frein de stationnement en vue de sa commande, un élément de commande (71) étant prévu pour la commande du dispositif de commande électrique (10), **caractérisé en ce qu'**un dispositif de commande manuel (30) pour la commande manuelle du frein de stationnement dans une position de freinage ou dans une position de libération en l'absence d'alimentation en puissance est prévu sur le dispositif de commande électrique (10), le dispositif de commande manuel (30) agissant sur un écrou de broche (20) de l'entraînement à broche filetée (17), qui est entraîné par le moteur électrique (11).

2. Véhicule selon la revendication 1, **caractérisé en ce que** le dispositif de commande manuel (30) comprend une manette (32) qui peut être amenée en liaison fonctionnelle avec l'entraînement à broche filetée (17) du dispositif de commande électrique (10) pour assurer la commande manuelle.

3. Véhicule selon la revendication 1 ou 2, **caractérisé en ce que** l'entraînement à broche filetée (17) comprend l'écrou de broche (20) entraîné au moyen du moteur électrique (11) et une broche filetée (24), qui est connectée au moyen de transmission, la manette (32) pouvant être amenée en liaison fonctionnelle avec l'écrou de broche (20) pour assurer la commande manuelle.

4. Véhicule selon l'une quelconque des revendications 1 à 3, **caractérisé en ce que** pour le fonctionnement électrique du dispositif de commande (10), on prévoit une position hors service du dispositif de commande manuel (30).

5. Véhicule selon l'une quelconque des revendications 1 à 4, **caractérisé en ce que** le dispositif de commande manuel (30) comprend un dispositif d'entraînement (31) qui peut être amené en liaison avec l'écrou de broche (20).

6. Véhicule selon la revendication 5, **caractérisé en ce que** le dispositif d'entraînement (31) peut être commandé au moyen de la manette (32).

7. Véhicule selon les revendications 5 et 6, **caractérisé en ce qu'**un dispositif de transfert de couple (35) est réalisé entre le dispositif d'entraînement (31) et l'écrou de broche (20).

8. Véhicule selon la revendication 7, **caractérisé en ce que** le dispositif de transfert de couple (35) est formé par au moins une griffe (36a ; 36b) du dispositif d'entraînement (31) et une rainure (37a ; 37b) de l'écrou de broche (20) coopérant avec la griffe (36a ; 36b).

9. Véhicule selon l'une quelconque des revendications 6 à 8, **caractérisé en ce qu'**un dispositif de transfert de couple (51) est réalisé entre la manette (32) et le dispositif d'entraînement (31).

10. Véhicule selon la revendication 9, **caractérisé en ce que** le dispositif de transfert de couple (51) est formé par au moins un renfoncement radial en forme de rainure (53) sur le dispositif d'entraînement (31) et une langue d'entraînement respective (52) de la manette (32) pouvant être amenée en prise avec le renfoncement (53).

11. Véhicule selon la revendication 10, **caractérisé en ce que** les langues d'entraînement (52) sont disposées sur la manette (32) en regard d'une portion de préhension (50).

12. Véhicule selon la revendication 10 ou 11, **caractérisé en ce que** le renfoncement (53) du dispositif d'entraînement (31) est pourvu de portions de flancs (53a ; 53b) latérales inclinées et la langue d'entraînement (52) de la manette (32) est déformable élastiquement, la précontrainte de la langue d'entraînement (52) et l'angle des flancs des portions de flancs latérales (53a ; 53b) du renfoncement (53) étant adaptés les uns aux autres de telle sorte qu'une limitation de couple puisse être obtenue pour le couple manuel appliqué sur la manette (32).

13. Véhicule selon l'une quelconque des revendications 5 à 12, **caractérisé en ce que** le dispositif d'entraînement (31) est disposé de manière déplaçable longitudinalement dans la région d'un couvercle du boîtier de transmission (26) de l'entraînement à broche filetée (17), entre le couvercle du boîtier de transmission (26) et le dispositif d'entraînement (31) étant disposé un dispositif de ressort (34) qui sollicite le dispositif d'entraînement (31) dans la position hors service, dans laquelle le dispositif de transfert de couple (35) est séparé de l'écrou de broche (20).

14. Véhicule selon la revendication 13, **caractérisé en ce qu'**entre le couvercle du boîtier de transmission (26) et le dispositif d'entraînement (31) est réalisée une butée (42) pour la position hors service du dispositif d'entraînement (31).

15. Véhicule selon la revendication 14, **caractérisé en ce que** la butée (42) est formée par au moins un nez d'encliquetage (43a ; 43b) du dispositif d'entraînement (31), qui peut être amené en liaison fonctionnelle avec une saillie (40) sur le couvercle du boîtier de transmission (26).

16. Véhicule selon l'une quelconque des revendications 2 à 15, **caractérisé en ce que** la manette (32) peut être enfilée avec une portion de préhension (50) dans la position hors service du dispositif de commande manuel (30) sur un couvercle de boîtier de transmission (26) de l'entraînement à broche filetée (17).

17. Véhicule selon la revendication 16, **caractérisé en ce que** dans la position hors service, la manette (32) est enfoncée par-dessus le dispositif d'entraînement (31).

18. Véhicule selon la revendication 16 ou 17, **caractérisé en ce que** la manette (32) est fixée au moyen d'une sécurité antiperte (60), notamment une patte flexible en plastique (61), sur le dispositif de commande électrique (10).

19. Véhicule selon l'une quelconque des revendications 1 à 18, **caractérisé en ce que** le dispositif de commande électrique (10) est disposé dans la région d'une console de commande (6), notamment d'un tableau de bord du poste de travail du conducteur (9).

20. Véhicule selon la revendication 19, **caractérisé en ce que** le dispositif de commande électrique (10) est disposé sur la console de commande (6) sous un recouvrement amovible (70), en particulier un couvercle, et lorsque le recouvrement (70) est enlevé, le dispositif de commande manuel (30) peut être amené en position d'engagement en vue de la commande manuelle du frein de stationnement, notamment la manette (32) peut être amenée en liaison avec l'entraînement à broche filetée (17), de préférence la manette (32) peut être amenée en liaison au moyen du dispositif de transfert de couple (51) avec le dispositif d'entraînement (31).

21. Véhicule selon la revendication 20, **caractérisé en ce que** lorsque le recouvrement (70) est enlevé, la manette (32) enfilée sur le couvercle du boîtier de transmission (26) est accessible et peut être retirée du couvercle du boîtier de transmission (26) et amenée dans la position d'engagement, ou peut être enfilée sur le couvercle de boîtier de transmission (26) dans la position hors service.

22. Véhicule selon l'une quelconque des revendications 1 à 21, **caractérisé en ce que** le véhicule est réalisé sous forme de véhicule électrique, en particulier un chariot de manutention, alimenté par batterie électrique.
